# EUROPEAN PATENT SPECIFICATION

(11) **EP 3 369 658 B1**
(45) Date of publication and mention of the grant of the patent: **30.12.2020**
(21) Application number: 17872893.7
(22) Date of filing: 30.11.2017
(51) Int. Cl.: B64D 27/24, B64C 39/02

(54) **UNMANNED AERIAL VEHICLE**
UNBEMANNTES LUFTFAHRZEUG
VÉHICULE AÉRIEN SANS PILOTE

(30) Priority: 05.12.2016 CN 201621321920 U
(43) Date of publication of application: 05.09.2018
(60) Divisional application: 20205713.9
(73) Proprietor: Autel Robotics Co., Ltd., Shenzhen, Guangdong 518055 (CN)
(72) Inventor: LUO, Dongdong, Shenzhen Guangdong 518055 (CN); NI, Feng, Shenzhen Guangdong 518055 (CN); LV, Hang, Shenzhen Guangdong 518055 (CN); SU, Wenbing, Shenzhen Guangdong 518055 (CN)
(74) Representative: Gulde & Partner
(86) International application number: PCT/CN2017/113768
(87) International publication number: WO 2018/103576

(56) References cited:
- CN-A- 104 743 121
- CN-A- 105 292 457
- CN-A- 105 292 457
- CN-U- 205 131 646
- CN-U- 205 131 646
- CN-U- 205 150 264
- CN-U- 205 203 399
- CN-U- 205 203 399
- CN-U- 205 248 837
- CN-U- 206 218 239
- JP-A- 2015 137 092
- US-A- 5 297 759
- US-A1- 2014 061 376
- US-A1- 2015 158 392

## Description

### Technical Field

The present invention relates to the field of drone technologies, and in particular, to an unmanned aerial vehicle.

### Related Art

An unmanned aerial vehicle is an unmanned aircraft managed by using radio remote control equipment and a self-contained program control device. Unmanned aerial vehicles are applied in the military field in the early stage, and are gradually applied in the consumer field with the development of science. Currently, unmanned aerial vehicles are widely applied in a variety of fields such as street view photographing, movie and television play shooting, environmental monitoring, geological survey, map drawing, and monitoring in terms of agriculture, forestry, and husbandry.

Unmanned aerial vehicles are classified into an unmanned fixed-wing aircraft, an unmanned multi-rotor aerial vehicle, and the like. A normal unmanned aerial vehicle is powered by a battery. For example, a currently popular four-rotor unmanned aerial vehicle is powered by a single battery. However, energy density of a single battery cannot be further improved due to a limitation of a current battery technology of the unmanned aerial vehicle. In addition, energy of a single battery needs to be less than 100 Wh according to the international convention. Consequently, an electric quantity provided by a single battery is very limited, leading to very short endurance of the unmanned aerial vehicle.

The US patent application US 20140061376A1 discloses a quadrotor UAV including ruggedized, integral-battery, load-bearing body, two arms on the load-bearing body, each arm having two rotors, a control module mounted on the load-bearing body, a payload module mounted on the control module, and skids configured as landing gear.

The US patent application US20150158392A1 discloses a battery which can include a power supply and power supply circuit, where the power supply circuit is connected to the power supply. The power supply can discharge through the power supply circuit.

The US patent US5297759A discloses a rotary aircraft which includes a cylindrically tubular hub mounting a plurality of outwardly extending, resiliently flexible blades.

The Chinese patent applications CN105292457A and CN205131646U disclose a big load unmanned aerial vehicle, including fuselage assembly and at least three arm assemblies.

The Chinese patent application CN205203399U discloses a battery receiving device, including a first base plate, a second base plate and a plurality of battery fixed frame.

### SUMMARY

To resolve a technical problem in the prior art that endurance of an unmanned aerial vehicle is short due to a small power supply volume, the present invention provides an unmanned aerial vehicle as claimed in claim 1.

In some embodiments, the battery accommodation cavity is disposed at at least one of the following locations on the fuselage: an inner portion, a side portion, a bottom portion or a top portion.

In some embodiments, each battery block includes a battery housing, a battery disposed inside the battery housing, an adapter board and a protection board;
the adapter board is electrically connected to the battery and is configured to monitor a performance status of the battery and feed back a monitoring result to a flight control board in the functional module; and
the protection board is disposed on an outer side of the battery and is configured to protect the battery.

In some embodiments, the adapter boards of the battery blocks in the battery pack are sequentially connected to form a series structure and an adapter board of one battery block in the battery pack is electrically connected to the battery circuit board.

In some embodiments, the adapter boards of the battery blocks in the battery pack are respectively connected to the battery circuit board and the battery blocks in the battery pack form a parallel structure via the battery circuit board.

In some embodiments, the battery circuit board includes at least two inner power supply loops and the two inner power supply loops are configured to allocate a total voltage on the battery circuit board; and
the functional module includes at least two electronic boards and each of the at least two inner power supply loops is electrically connected to at least one electronic board.
In some embodiments, the at least two battery blocks are evenly distributed around the center of the fuselage.

In some embodiments, the fuselage includes a fuselage body and multiple arms spaced on an outer periphery of the fuselage body, the battery accommodation cavity is disposed inside the fuselage body, each opening of the battery accommodation cavity is located between two neighboring arms and at least one battery block is mounted at each opening of the battery accommodation cavity.

In some embodiments, the battery accommodation cavity runs through the fuselage body on a plane of the fuselage body in a first direction and/or a second direction, the first direction being perpendicular to the second direction.

In some embodiments, the battery accommodation cavity includes two openings and the battery pack includes two battery blocks, the two battery blocks being oppositely disposed inside the battery accommodation cavity respectively via the two openings.

In some embodiments, the battery accommodation cavity includes four openings and the battery pack includes four battery blocks, the four battery blocks being disposed inside the battery accommodation cavity respectively via the four openings and two battery blocks in a same direction being disposed oppositely.

In some embodiments, the battery circuit board is a printed circuit board assembly (PCBA).

The technical solution provided in the embodiments of the present invention can include the following beneficial effects:
In the present invention, the battery pack including at least two battery blocks is disposed inside the battery accommodation cavity, the battery blocks in the battery pack being electrically connected to the battery circuit board, and the battery blocks in the battery pack supplying power to the functional module via the battery circuit board at the same time. Compared with the prior art in which a single battery is used to supply power, in the present invention, a battery capacity of an unmanned aerial vehicle is increased, and endurance of the unmanned aerial vehicle is lengthened.

It should be understood that the foregoing general description and the following detailed description are merely exemplary, and cannot limit the present invention.

### BRIEF DESCRIPTION OF THE DRAWINGS

The accompanying drawings herein are included in this specification, form a part of this specification, show embodiments conforming to the present invention, and are used, together with this specification, to explain the principle of the present invention.
FIG. 1 is a schematic view of an external structure of an unmanned aerial vehicle according to an embodiment of the present invention;
FIG. 2 is a view of an internal structure of the unmanned aerial vehicle shown in FIG. 1;
FIG. 3 is a schematic structural view of a battery block of the unmanned aerial vehicle shown in FIG. 1; and
FIG. 4 is a schematic structural view of a functional module of the unmanned aerial vehicle shown in FIG. 1.

List of Reference Numerals: 10. Unmanned aerial vehicle; 11. Fuselage; 12. Battery accommodation cavity; 13. Battery block; 14. Battery circuit board; 15. Functional module; 111. Fuselage body; 112. Arm; 113. Propeller; 114. Power motor; 115. Landing gear; 131. Battery housing; 132. Battery; 133. Adapter board; 134. Protection board; 151. Flight control board; 152. Functional electronic board; 1521. Electronic speed control board; 1522. Steering driving board; and 1523. Radar electronic board.

### DETAILED DESCRIPTION

The following clearly and completely describes the technical solutions of the present invention with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the description of the present invention, it should be noted that directions or location relationships indicated by terms "center", "upper", "lower", "left", "right", "vertical", "horizontal", "inner", "outer", and the like are directions or location relationships shown based on the accompanying drawings, are merely used to facilitate description of the present invention and simplified descriptions, but are not used to indicate or imply that a device or an element must have a particular direction or must be constructed and operated in a particular direction, and therefore, cannot be understood as a limitation to the present invention. In addition, terms "first", "second", and the like are merely used for description, but cannot be understood as indication or implication of relative importance.

In the description of the present invention, it should be noted that unless otherwise specified and limited, terms "mounting", "communicating", and "connecting" should be understood in a generalized way, for example, may be fixed connection, detachable connection, or integral connection; may be mechanical connection, or electrical connection; may be direct connection, indirect connection using an intermediate medium, or internal communication between two elements. A person of ordinary skill in the art may understand specific meanings of the terms in the present invention according to specific situations.

In the embodiments of the present invention, a term "A and/or B" includes one of the following three cases: A; B; A and B.

In addition, the following described technical features in different implementations of the present invention may be combined provided that no conflict exists between the technical features.

An unmanned aerial vehicle provided in the present invention may be applied to multiple types of aerial vehicles, for example, a fixed-wing unmanned aerial vehicle, or a multi-rotor unmanned aerial vehicle. In the present invention, the solution of the present invention is described by using a four-rotor unmanned aerial vehicle as an example.

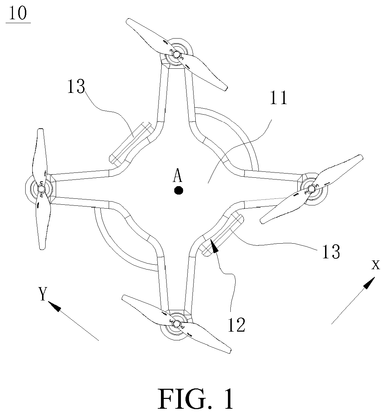

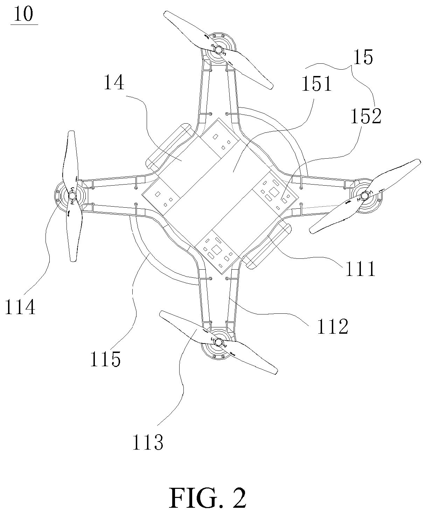

As shown in FIG. 1 and FIG. 2, FIG. 1 is a schematic view of an external structure of an unmanned aerial vehicle 10 according to an embodiment of the present invention and FIG. 2 is a view of an internal structure of the unmanned aerial vehicle 10 shown in FIG. 1. The unmanned aerial vehicle 10 includes a fuselage 11, a battery accommodation cavity 12 disposed on the fuselage 11, a battery pack mounted inside the battery accommodation cavity 12, a battery circuit board 14 electrically connected to battery blocks in the battery pack, and a functional module 15 disposed inside the fuselage 11. In this embodiment, the battery accommodation cavity 12 is disposed inside the fuselage 11. In another embodiment, the battery accommodation cavity 12 may alternatively be disposed at another location on the fuselage 11, for example, disposed on a side portion, a bottom portion or a top portion of the fuselage 11. The functional module 15 is electrically connected to the battery circuit board 14, and the battery pack includes at least two battery blocks 13, for example, two battery blocks, three battery blocks or four battery blocks. The battery circuit board 14 may be directly electrically connected to the one or more battery blocks 13 in the battery pack. The battery blocks 13 in the battery pack supply power to the functional module 15 via the battery circuit board 14 at the same time.

The fuselage 11 includes a fuselage body 111, multiple arms 112, multiple propellers 113, multiple power motors 114 and landing gears 115. The multiple arms 112 extend outwards from the fuselage body 111 and are evenly distributed on an outer periphery of the fuselage body 111. One power motor 114 is disposed on a tail end of each arm 112. The power motor 114 is connected to the propeller 113. The propellers 113 are driven by the power motors 114 to rotate at a high speed. Rotation interacts with the air to generate lifting force, so as to drive the unmanned aerial vehicle 10 to rise. The landing gears 115 are configured to support weight of the unmanned aerial vehicle 10 when the unmanned aerial vehicle 10 parks on the ground or when the unmanned aerial vehicle 10 takes off or lands.

The battery accommodation cavity 12 is disposed inside the fuselage body 111, an opening of the battery accommodation cavity 12 is located between two neighboring arms 112 and at least one battery block 13 is mounted at each opening of the battery accommodation cavity 12. The battery accommodation cavity 12 may run through the fuselage body 111 on a plane of the fuselage body 111 in a first direction and/or a second direction. In other words, the battery accommodation cavity 12 may run through the fuselage body 111 on the plane of the fuselage body 111 in the first direction; or the battery accommodation cavity 12 may run through the fuselage body 111 on the plane of the fuselage body 111 in the second direction; or the battery accommodation cavity 12 may run through the fuselage body 111 on the plane of the fuselage body 111 in the first direction and the second direction. The first direction may be perpendicular to the second direction.

In an embodiment, the battery accommodation cavity 12 extends in the first direction (the Y-axis direction shown in FIG. 1) and runs through the fuselage body 111 on the plane of the fuselage body 111 in the first direction. The battery accommodation cavity 12 includes at least two openings. Two battery blocks 13 are inserted into the battery accommodation cavity 12 respectively via the two openings and are mounted inside the battery accommodation cavity 12. To ensure equilibrium and stability of the unmanned aerial vehicle, the two battery blocks 13 are oppositely disposed inside the battery accommodation cavity 12, in other words, are located on a same plane and are symmetrically arranged in a line around the center of the fuselage. It may be understood that multiple battery blocks may be disposed at each opening of the battery accommodation cavity 12. For example, two battery blocks are disposed at one opening. The battery accommodation cavity 12 extends in the first direction in FIG. 1. However, this is not limited thereto.

In an embodiment, the battery accommodation cavity 12 may extend in the second direction (the X-axis direction shown in FIG. 1) and run through the fuselage body 111 on the plane of the fuselage body 111 in the second direction. The first direction and the second direction are perpendicular to each other and are located on a same plane.

In another embodiment, the battery accommodation cavity 12 may alternatively extend in the first direction and the second direction in a cross manner, and run through the fuselage body 111 on the plane of the fuselage 111 in the first direction and the second direction. The battery accommodation cavity 12 is of a cross shape, and one opening is formed on each end portion of the cross. There are four openings in total, and each opening is located between two neighboring arms 112. One battery block 13 may be mounted at each opening. The battery accommodation cavity 12 can accommodate four battery blocks 13. In other words, two battery blocks 13 are placed in the second direction, two battery blocks 13 are placed in the first direction, the four battery blocks 13 do not overlap and are arranged on a same horizontal plane and two battery blocks in a same direction (in the second direction or the first direction) are disposed oppositely.

To ensure equilibrium of the unmanned aerial vehicle, the openings used for mounting the battery blocks 13 in the battery accommodation cavity 12 are evenly distributed around the center (as shown in FIG. 1, point A is the center of the fuselage) of the fuselage 11. In other words, the at least two battery blocks 13 mounted inside the battery accommodation cavity 12 are evenly distributed around the center of the fuselage 11. As shown in FIG. 1, two battery blocks 13 are evenly distributed at two sides of point A.

An extension direction or a shape of the battery accommodation cavity 12 is not limited to the case listed above, and may vary with a type of the unmanned aerial vehicle (for example, a four-rotor unmanned aerial vehicle, or a six-rotor unmanned aerial vehicle) and a shape or a volume of the fuselage 11. In addition, the number of the battery blocks 13 may also vary with the battery accommodation cavity 12, and at least two battery blocks 13 are placed inside the battery accommodation cavity 12.

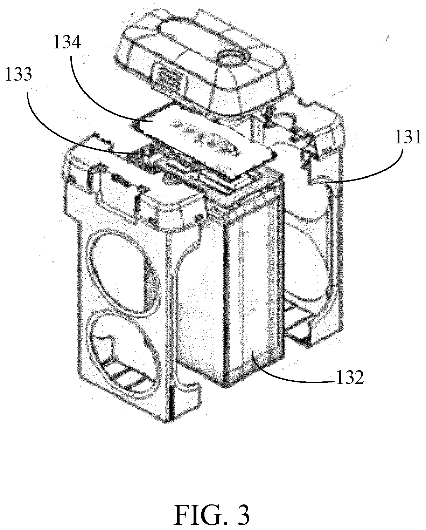

As shown in FIG. 3, FIG. 3 is a schematic structural view of the battery block 13. The battery block 13 includes a battery housing 131, a battery 132 disposed inside the battery housing 131, an adapter board 133 and a protection board 134. The adapter board 133 (also referred to as a battery pipeline module) is electrically connected to the battery 132 and is configured to monitor a performance status of the battery 132, for example, a temperature and a capacity of the battery, and feed back a monitoring result to a flight control board in the functional module 15. The protection board 134 is disposed on an outer side of the battery 132 and may cover the entire battery 132. The protection board 134 may be a metal board, for example, an aluminum board, and is configured to protect the battery 132 when the battery falls, to prevent the battery 132 from being broken or deformed.

The battery circuit board 14 may be tightly mounted on an outer surface of a battery housing 131 of one battery block 13 or may be disposed on a base board of the fuselage 11. The battery circuit board 14 is electrically connected to the functional module 15 and the battery blocks 13 in the battery pack supply power to the functional module 15 via the battery circuit board 14 at the same time.

At least one battery block 13 in the battery pack is electrically connected to the battery circuit board 14. For example, when the battery blocks 13 in the battery pack form a series structure, only one battery block 13 in the battery pack is electrically connected to the battery circuit board 14. When the battery blocks 13 in the battery pack form a parallel structure, each battery block 13 in the battery pack is electrically connected to the battery circuit board 14. An implementation process in which the battery blocks in the battery pack form a series structure or a parallel structure is as follows:
Implementation process in which the battery blocks 13 in the battery pack form a series structure:
The adapter boards 133 of the battery blocks 13 in the battery pack are sequentially connected to form a series structure and the battery pack having the series structure is connected to the battery circuit board 14 via an adapter board 133 of one battery block 13. For example, the battery pack includes two battery blocks: a battery block A and a battery block B. One group of positive and negative power interfaces are disposed on an adapter board of the battery block A, and two groups of positive and negative power interfaces are disposed on an adapter board of the battery block B. The positive power interface of the battery block A is connected to a negative power interface in a first group of positive and negative power interfaces of the battery block B and the negative power interface of the battery block A is connected to a positive power interface in the first group of positive and negative power interfaces of the battery block B, so that a loop is formed between the battery block A and the battery block B. A second group of positive and negative power interfaces of the battery block B are respectively connected to positive and negative interfaces of the battery circuit board 14. In this way, the battery blocks in the battery pack form the series structure, and a series power source is electrically connected to the battery circuit board 14 and supplies power to the functional module 15.

In addition, performance statuses of the batteries of the battery blocks 13 in the battery pack may also be fed back to the flight control board by forming a series structure of the adapter boards 133 of the battery blocks 13. Specifically, battery block A is equipped with one data transmission interface, battery block B is equipped with two data transmission interfaces. The data transmission interface on the adapter board of the battery block A is connected to one data transmission interface on the adapter board of the battery block B, and the other data transmission interface on the adapter board of the battery block B is connected to the flight control board. In this way, a performance status of a battery of the battery block A is transmitted to the battery block B via the data transmission interface on the adapter board of the battery block A, and the battery block B feeds back the performance status of the battery of the battery block A and a performance status of a battery of the battery block B to the flight control board via the other data transmission interface on the adapter board of the battery block B. After receiving the performance statuses of the batteries of the battery blocks, the flight control board may further feed back the performance statuses to a remote control device of the unmanned aerial vehicle, so that a user can learn usage statuses of the batteries in the unmanned aerial vehicle in time.

Implementation process in which the battery blocks 13 in the battery pack form a series structure:
The adapter boards 133 of the battery blocks 13 in the battery pack are respectively connected to the battery circuit board 14 and the battery blocks 13 in the battery pack form a parallel structure via an inner circuit of the battery circuit board 14. For example, the battery pack includes two battery blocks: a battery block A and a battery block B. Battery block A and battery block B are both equipped with one group of positive and negative power interfaces. The positive power interface of the battery block A is connected to a positive interface in a first group of positive and negative interfaces of the battery circuit board 14, the negative power interface of the battery block A is connected to a negative interface in the first group of positive and negative interfaces of the battery circuit board 14, the positive power interface of the battery block B is connected to a positive interface in a second group of positive and negative interfaces of the battery circuit board 14, and the negative power interface of the battery block B is connected to a negative interface in the second group of positive and negative interfaces of the battery circuit board 14. The positive interface in the first group of positive and negative interfaces is connected to the positive interface in the second group of positive and negative interfaces via an inner circuit of the battery circuit board 14, and the negative interface in the first group of positive and negative interfaces is connected to the negative interface in the second group of positive and negative interfaces via an inner circuit of the battery circuit board 14. In this way, the battery blocks in the battery pack form the parallel structure. It may be understood that the battery circuit board 14 may be equipped with only one group of positive and negative interfaces. In this case, the positive power interface of the battery block A and the positive power interface of the battery block B both are connected to the positive interface of the battery circuit board 14, and the negative power interface of the battery block A and the negative power interface of the battery block B both are connected to the negative interface of the battery circuit board 14.

In addition, performance statuses of the batteries of the battery blocks 13 in the battery pack may also be fed back to the flight control board via the respective adapter boards 133 of the battery blocks 13. Specifically, each of the adapter board of the battery block A and the adapter board of the battery block B is equipped with a data transmission interface , and the data transmission interfaces of the battery block A and the battery block B are separately connected to the flight control board. In this way, performance statuses of batteries of the battery block A and the battery block B are fed back to the flight control board via the data transmission interfaces of the battery block A and the battery block B.

It may be understood that the battery blocks 13 included in the battery pack may be all connected in series or in parallel and supply power to the functional module 15 via the battery circuit board 14 at the same time. Alternatively, some battery blocks are connected in series first, and then are connected in parallel to the remaining battery blocks, so as to supply power to the functional module 15 via the battery circuit board 14 at the same time. This is not limited in this embodiment.

The functional module 15 includes multiple electronic boards, and the multiple electronic boards may be a flight control board 151 configured to control flight of the unmanned aerial vehicle 10 and functional electronic boards 152. The functional electronic boards 152 are electrically connected to the flight control board 151. The flight control board 151 is disposed above the battery circuit board 14 by using an insulation component, and the functional electronic boards 152 are disposed on side edges of the battery circuit board 14.

The functional electronic boards 152 may include electronic speed control boards 1521, a steering driving board 1522, a radar electronic board 1523, and other electronic boards. No exhaustion is provided herein.

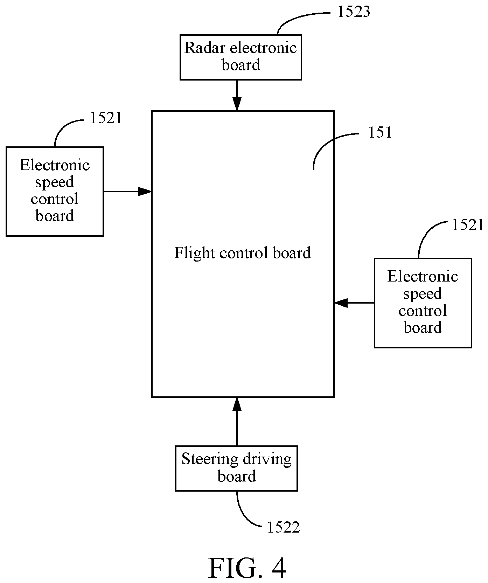

As shown in FIG. 4, the electronic speed control boards 1521, the steering driving board 1522, and the radar electronic board 1523 are all electrically connected to the flight control board 151.

The battery circuit board 14 includes one or more than one inner power supply loops, and the battery circuit board 14 supplies power to the functional module 15 via the inner power supply loop. The inner power supply loop may be printed on the battery circuit board 14, and is configured to allocate a total voltage on the battery circuit board 14.

When the battery circuit board 14 includes two or more than two inner power supply loops, the total voltage on the battery circuit board 14 may be equally or unequally allocated by using the inner power supply loops. For example, the battery circuit board 14 includes three inner power supply loops, and the total voltage on the battery circuit board 14 is 10 volts. Then, a voltage provided by a first inner power supply loop is 2.5 volts, a voltage provided by a second inner power supply loop is 3.5 volts, and a voltage provided by a third inner power supply loop is 4 volts. Each power supply loop supplies power to one or more than one corresponding electronic boards according to a supply voltage of the power supply loop. For example, the first inner power supply loop having a low supply voltage supplies power to an electronic board having low power consumption (for example, the radar electronic board 1523), the second inner power supply loop having an intermediate supply voltage supplies power to the flight control board 151, and the third inner power supply loop having a high supply voltage supplies power to an electronic board having high power consumption (for example, the multiple electronic speed control boards 1521).

Therefore, by laying two or more inner power supply loops on the battery circuit board 14, power can be supplied to electronic boards having different power consumption for saving electric energy and lengthening endurance further.

Each inner power supply loop on the battery circuit board 14 is electrically connected to at least one electronic board, to supply power to the at least one electronic board. For example, the battery circuit board includes two inner power supply loops, a first inner power supply loop electrically connecting to the flight control board 151, and a second inner power supply loop electrically connecting to the electronic speed control boards 1521, the steering driving board 1522, the radar electronic board 1523 and the like.

In addition, capacities of the multiple battery blocks disposed inside the battery accommodation cavity 12 may be the same or may be different.

The battery circuit board 14 may be a battery PCBA (Printed Circuit Board Assembly).

In the unmanned aerial vehicle in the present invention, when the at least two battery blocks are discharged at the same time, power is supplied to the functional module via the battery circuit board. If a capacity of each battery block is marked as I, a voltage of the battery block is marked as U, discharging utilization of the battery block is marked as η, the number of batteries is marked as n, and total power consumption of the unmanned aerial vehicle is marked as P, the endurance of the aerial vehicle may be represented as t=n^{∗}U^{∗}I^{∗}η/P, where n≥2 and η<1. As can be learned from the foregoing formula, when a capacity and a voltage of a single battery block are the same, endurance of an unmanned aerial vehicle using two or more battery blocks is far longer than endurance of an unmanned aerial vehicle using a single battery block.

About all, in the present invention, the battery pack is disposed inside the battery accommodation cavity, the battery pack including at least two battery blocks, the battery blocks in the battery pack supplying power to the functional module via the battery circuit board at the same time, and the battery blocks being discharged at the same time, so that a battery capacity of the unmanned aerial vehicle is increased, and endurance of the unmanned aerial vehicle is lengthened.

In addition, in the present invention, the battery circuit board includes at least two inner power supply loops and each inner power supply loop supplies power to one or more corresponding electronic boards, so that the inner power supply loops providing different supply voltages can supply power to the electronic boards having different power consumption. Therefore, power consumption is reduced, and endurance is further lengthened.

Finally, it should be noted that the foregoing embodiments are merely used to describe the technical solutions of the present invention, rather than limiting the present invention. Under the idea of the present invention, the foregoing embodiments or technical features of different embodiments may be combined, steps may be implemented in any sequence, and many other changes in different aspects may be made to the present invention. For brevity, details are not provided. Although the present invention is described in detail with reference to the foregoing embodiments, a person of ordinary skill in the art should understand that modifications may be made to the technical solutions recorded in the foregoing embodiments, that should not cause the essence of the corresponding technical solutions to depart from the scope of the technical solutions of the claims of the present invention.

## Claims

1. An unmanned aerial vehicle (10), comprising:
a fuselage (11) having a battery accommodation cavity (12); wherein
the battery accommodation cavity (12) comprises at least two openings, the unmanned aerial vehicle (10) further comprising:
a battery pack comprising at least two battery blocks (13) and configured to be detachably connected inside the battery accommodation cavity (12);
a battery circuit board (14) electrically connected to the battery blocks (13) in the battery pack; and
a functional module (15) electrically connected to the battery circuit board (14);
wherein the battery blocks (13) in the battery pack supply power to the functional module (15) at the same time via the battery circuit board (14);
wherein each of the at least two battery blocks (13) is inserted into the battery accommodation cavity (12) via a corresponding one of the at least two openings; and
wherein at least one of the at least two battery blocks (13) is detachably connected at its corresponding one of the at least two openings.

2. The unmanned aerial vehicle (10) according to claim 1, wherein the battery accommodation cavity (12) is disposed at at least one of the following locations on the fuselage (11): an inner portion, a side portion, a bottom portion or a top portion.

3. The unmanned aerial vehicle (10) according to claim 1 or 2, wherein each battery block (13) comprises a battery housing (131), a battery (132) disposed inside the battery housing (131), an adapter board (133) and a protection board (134);
the adapter board (133) is electrically connected to the battery (132) and is configured to monitor a performance status of the battery (132) and feed back a monitoring result to a flight control board in the functional module (15); and
the protection board (134) is disposed on an outer side of the battery (132) and is configured to protect the battery (132).

4. The unmanned aerial vehicle (10) according to claim 3, wherein the adapter boards (133) of the battery blocks (13) in the battery pack are sequentially connected to form a series structure and an adapter board (133) of one battery block (13) in the battery pack is electrically connected to the battery circuit board (14).

5. The unmanned aerial vehicle (10) according to claim 3, wherein the adapter boards (133) of the battery blocks (13) in the battery pack are respectively connected to the battery circuit board (14) and the battery blocks (13) in the battery pack form a parallel structure via the battery circuit board (14).

6. The unmanned aerial vehicle (10) according to any of claims 1 to 5, wherein the battery circuit board (14) comprises at least two inner power supply loops and the inner power supply loops are configured to allocate a total voltage on the battery circuit board (14); and
the functional module (15) comprises at least two electronic boards and each of the at least two inner power supply loops is electrically connected to at least one electronic board.

7. The unmanned aerial vehicle (10) according to any of claims 1 to 6, wherein the at least two battery blocks (13) are evenly distributed around the center of the fuselage (11).

8. The unmanned aerial vehicle (10) according to any of claims 1 to 7, wherein the fuselage (11) comprises a fuselage body (111) and multiple arms (112) spaced on an outer periphery of the fuselage body (111), the battery accommodation cavity (12) is disposed inside the fuselage body (111), each opening of the battery accommodation cavity (12) is located between two neighboring arms (112) and at least one battery block (13) is detachably connected at each opening of the battery accommodation cavity (12).

9. The unmanned aerial vehicle (10) according to claim 8, wherein the battery accommodation cavity (12) runs through the fuselage body (111) on a plane of the fuselage body (111) in a first direction and a second direction, the first direction being perpendicular to the second direction.

10. The unmanned aerial vehicle (10) according to claim 8 or 9, wherein the battery accommodation cavity (12) comprises two openings and the battery pack comprises two battery blocks (13), the two battery blocks (13) being oppositely disposed inside the battery accommodation cavity (12) respectively via the two openings.

11. The unmanned aerial vehicle (10) according to claim 8 or 9, wherein the battery accommodation cavity (12) comprises four openings and the battery pack comprises four battery blocks (13), the four battery blocks (13) being disposed inside the battery accommodation cavity (12) respectively via the four openings and two battery blocks (13) in a same direction being disposed oppositely.

12. The unmanned aerial vehicle (10) according to any of claims 1 to 11, wherein the battery circuit board (14) is a printed circuit board assembly (PCBA).

## Patentansprüche

1. Unbemanntes Luftfahrzeug (10), umfassend:
einen Rumpf (11) mit einem Batterieaufnahmehohlraum (12);
wobei der Batterieaufnahmehohlraum (12) mindestens zwei Öffnungen umfasst, wobei das unbemannte Luftfahrzeug (10) des Weiteren umfasst:
einen Batteriepack, der mindestens zwei Batterieblöcke (13) umfasst und so konfiguriert ist, dass er im Inneren des Batterieaufnahmehohlraums (12) lösbar verbunden werden kann;
eine Batterieleiterplatte (14), die elektrisch mit den Batterieblöcken (13) in dem Batteriepack verbunden ist; und
ein Funktionsmodul (15), das elektrisch mit der Batterieleiterplatte (14) verbunden ist;
wobei die Batterieblöcke (13) in dem Batteriepack gleichzeitig Strom zu dem Funktionsmodul (15) über die Batterieleiterplatte (14) leiten;
wobei jeder der mindestens zwei Batterieblöcke (13) über eine entsprechende der mindestens zwei Öffnungen in den Batterieaufnahmehohlraum (12) eingeführt wird; und
wobei mindestens einer der mindestens zwei Batterieblöcke (13) an seiner entsprechenden der mindestens zwei Öffnungen lösbar verbunden ist.

2. Unbemanntes Luftfahrzeug (10) nach Anspruch 1, wobei der Batterieaufnahmehohlraum (12) an mindestens einer der folgenden Stellen des Rumpfes (11) angeordnet ist: einem inneren Abschnitt, einem Seitenabschnitt, einem unteren Abschnitt oder einem oberen Abschnitt.

3. Unbemanntes Luftfahrzeug (10) nach Anspruch 1 oder 2, wobei jeder Batterieblock (13) ein Batteriegehäuse (131), eine innerhalb des Batteriegehäuses (131) angeordnete Batterie (132), eine Adapterplatte (133) und eine Schutzplatte (134) umfasst;
die Adapterplatte (133) elektrisch mit der Batterie (132) verbunden und dazu konfiguriert ist, einen Leistungsstatus der Batterie (132) zu überwachen und ein Überwachungsergebnis an eine Flugsteuerplatine in dem Funktionsmodul (15) rückzukoppeln; und
die Schutzplatte (134) an einer Außenseite der Batterie (132) angeordnet und dazu konfiguriert ist, die Batterie (132) zu schützen.

4. Unbemanntes Luftfahrzeug (10) nach Anspruch 3, wobei die Adapterplatten (133) der Batterieblöcke (13) in dem Batteriepack sequentiell verbunden sind, um eine Reihenstruktur zu bilden, und eine Adapterplatte (133) eines Batterieblocks (13) in dem Batteriepack elektrisch mit der Batterieleiterplatte (14) verbunden ist.

5. Unbemanntes Luftfahrzeug (10) nach Anspruch 3, wobei die Adapterplatten (133) der Batterieblöcke (13) in dem Batteriepack jeweils mit der Batterieleiterplatte (14) verbunden sind und die Batterieblöcke (13) in dem Batteriepack über die Batterieleiterplatte (14) eine Parallelstruktur bilden.

6. Unbemanntes Luftfahrzeug (10) nach einem der Ansprüche 1 bis 5, wobei die Batterieleiterplatte (14) mindestens zwei innere Stromversorgungsschleifen umfasst und die inneren Stromversorgungsschleifen dazu konfiguriert sind, eine Gesamtspannung auf der Batterieleiterplatte (14) zuzuweisen; und
das Funktionsmodul (15) mindestens zwei elektronische Platinen umfasst und jede der mindestens zwei inneren Stromversorgungsschleifen mit mindestens einer elektronischen Platine elektrisch verbunden ist.

7. Unbemanntes Luftfahrzeug (10) nach einem der Ansprüche 1 bis 6, wobei die mindestens zwei Batterieblöcke (13) gleichmäßig um die Mitte des Rumpfes (11) verteilt sind.

8. Unbemanntes Luftfahrzeug (10) nach einem der Ansprüche 1 bis 7, wobei der Rumpf (11) einen Rumpfkörper (111) und mehrere Arme (112) aufweist, die an einem Außenumfang des Rumpfkörpers (111) beabstandet sind, der Batterieaufnahmehohlraum (12) innerhalb des Rumpfkörpers (111) angeordnet ist, jede Öffnung des Batterieaufnahmehohlraums (12) zwischen zwei benachbarten Armen (112) angeordnet ist und mindestens ein Batterieblock (13) an jeder Öffnung des Batterieaufnahmehohlraums (12) lösbar verbunden ist.

9. Unbemanntes Luftfahrzeug (10) nach Anspruch 8, wobei der Batterieaufnahmehohlraum (12) durch den Rumpfkörper (111) auf einer Ebene des Rumpfkörpers (111) in einer ersten Richtung und einer zweiten Richtung verläuft, wobei die erste Richtung senkrecht zu der zweiten Richtung verläuft.

10. Unbemanntes Luftfahrzeug (10) nach Anspruch 8 oder 9, wobei der Batterieaufnahmehohlraum (12) zwei Öffnungen umfasst und der Batteriepack zwei Batterieblöcke (13) umfasst, wobei die beiden Batterieblöcke (13) über die beiden Öffnungen jeweils gegenüberliegend im Inneren des Batterieaufnahmehohlraums (12) angeordnet sind.

11. Unbemanntes Luftfahrzeug (10) nach Anspruch 8 oder 9, wobei der Batterieaufnahmehohlraum (12) vier Öffnungen umfasst und der Batteriepack vier Batterieblöcke (13) umfasst, wobei die vier Batterieblöcke (13) jeweils über die vier Öffnungen innerhalb des Batterieaufnahmehohlraums (12) angeordnet sind und zwei Batterieblöcke (13) in derselben Richtung gegenüberliegend angeordnet sind.

12. Unbemanntes Luftfahrzeug (10) nach einem der Ansprüche 1 bis 11, wobei die Batterieleiterplatte (14) eine gedruckte Leiterplattenbaugruppe (PCBA) ist.

## Revendications

1. Véhicule aérien sans pilote (10), comprenant :
un fuselage (11) ayant une cavité de logement de batterie (12) ;
dans lequel
la cavité de logement de batterie (12) comprend au moins deux ouvertures, le véhicule aérien sans pilote (10) comprenant en outre :
un bloc-batterie comprenant au moins deux éléments de batterie (13) et configuré pour être connecté de manière amovible à l'intérieur de la cavité de logement de batterie (12) ;
une carte de circuit de batterie (14) connectée électriquement aux éléments de batterie (13) dans le bloc-batterie ; et
un module fonctionnel (15) connecté électriquement à la carte de circuit de batterie (14) ;
dans lequel les éléments de batterie (13) dans le bloc-batterie fournissent de l'énergie au module fonctionnel (15) en même temps via la carte de circuit de batterie (14) ;
dans lequel lesdits au moins deux éléments de batterie (13) sont chacun insérés dans la cavité de logement de batterie (12) via une ouverture correspondante parmi lesdites au moins deux ouvertures ; et
dans lequel au moins un élément de batterie parmi lesdits au moins deux éléments de batterie (13) est connecté de manière amovible au niveau de son ouverture correspondante parmi lesdites au moins deux ouvertures.

2. Véhicule aérien sans pilote (10) selon la revendication 1, dans lequel la cavité de logement de batterie (12) est disposée à au moins un des emplacements suivants sur le fuselage (11) : une portion interne, une portion latérale, une portion inférieure ou une portion supérieure.

3. Véhicule aérien sans pilote (10) selon la revendication 1 ou 2, dans lequel chaque élément de batterie (13) comprend un boîtier de batterie (131), une batterie (132) disposée à l'intérieur du boîtier de batterie (131), une carte d'adaptateur (133) et une carte de protection (134) ;
la carte d'adaptateur (133) est connectée électriquement à la batterie (132) et est configurée pour surveiller un état de performance de la batterie (132) et donner en retour un résultat de surveillance à une carte de commande de vol dans le module fonctionnel (15) ; et
la carte de protection (134) est disposée sur un côté externe de la batterie (132) et est configurée pour protéger la batterie (132).

4. Véhicule aérien sans pilote (10) selon la revendication 3, dans lequel les cartes d'adaptateur (133) des éléments de batterie (13) dans le bloc-batterie sont connectées séquentiellement pour former une structure en série et une carte d'adaptateur (133) d'un élément de batterie (13) dans le bloc-batterie est connectée électriquement à la carte de circuit de batterie (14).

5. Véhicule aérien sans pilote (10) selon la revendication 3, dans lequel les cartes d'adaptateur (133) des éléments de batterie (13) dans le bloc-batterie sont connectées respectivement à la carte de circuit de batterie (14) et les éléments de batterie (13) dans le bloc-batterie forment une structure parallèle via la carte de circuit de batterie (14).

6. Véhicule aérien sans pilote (10) selon l'une quelconque des revendications 1 à 5, dans lequel la carte de circuit de batterie (14) comprend au moins deux boucles internes de fourniture d'énergie et les boucles internes de fourniture d'énergie sont configurées pour attribuer une tension totale sur la carte de circuit de batterie (14) ; et
le module fonctionnel (15) comprend au moins deux cartes électroniques et lesdites au moins deux boucles internes de fourniture d'énergie sont chacune connectées électriquement à au moins une carte électronique.

7. Véhicule aérien sans pilote (10) selon l'une quelconque des revendications 1 à 6, dans lequel lesdits au moins deux éléments de batterie (13) sont distribués de manière uniforme autour du centre du fuselage (11).

8. Véhicule aérien sans pilote (10) selon l'une quelconque des revendications 1 à 7, dans lequel le fuselage (11) comprend un corps de fuselage (111) et plusieurs bras (112) espacés sur une périphérie externe du corps de fuselage (111), la cavité de logement de batterie (12) est disposée à l'intérieur du corps de fuselage (111), chaque ouverture de la cavité de logement de batterie (12) est située entre deux bras voisins (112) et au moins un élément de batterie (13) est connecté de manière amovible au niveau de chaque ouverture de la cavité de logement de batterie (12).

9. Véhicule aérien sans pilote (10) selon la revendication 8, dans lequel la cavité de logement de batterie (12) traverse le corps de fuselage (111) sur un plan du corps de fuselage (111) dans une première direction et une deuxième direction, la première direction étant perpendiculaire à la deuxième direction.

10. Véhicule aérien sans pilote (10) selon la revendication 8 ou 9, dans lequel la cavité de logement de batterie (12) comprend deux ouvertures et le bloc-batterie comprend deux éléments de batterie (13), les deux éléments de batterie (13) étant disposés de manière opposée à l'intérieur de la cavité de logement de batterie (12) respectivement via des deux ouvertures.

11. Véhicule aérien sans pilote (10) selon la revendication 8 ou 9, dans lequel la cavité de logement de batterie (12) comprend quatre ouvertures et le bloc-batterie comprend quatre éléments de batterie (13), les quatre éléments de batterie (13) étant disposés à l'intérieur de la cavité de logement de batterie (12) respectivement par l'intermédiaire des quatre ouvertures et deux éléments de batterie (13) dans une même direction étant disposés de manière opposée.

12. Véhicule aérien sans pilote (10) selon l'une quelconque des revendications 1 à 11, dans lequel la carte de circuit de batterie (14) est un assemblage de carte de circuit imprimé (PCBA).
